# EUROPÄISCHE PATENTSCHRIFT

(11) **EP 2 628 367 B1**
(45) Veröffentlichungstag und Bekanntmachung des Hinweises auf die Patenterteilung: **15.07.2015**
(21) Anmeldenummer: 11771082.2
(22) Anmeldetag: 12.10.2011
(51) Int. Cl.: H05B 41/285, H02H 5/04, H05B 37/03

(54) **BETRIEBSGERÄT ZUR AUSGABE VON TEMPERATUR-INFORMATION**
OPERATING DEVICE FOR OUTPUTTING TEMPERATURE INFORMATION
DISPOSITIF DE FONCTIONNEMENT POUR DONNER UNE INFORMATION DE TEMPÉRATURE

(30) Priorität: 12.10.2010 DE 102010042310
(43) Veröffentlichungstag der Anmeldung: 21.08.2013
(73) Patentinhaber: Tridonic GmbH & Co KG, 6851 Dornbirn (AT)
(72) Erfinder: MAIER, Simon, A-6800 Feldkirch (AT)
(74) Vertreter: Rupp, Christian
(86) Internationale Anmeldenummer: PCT/EP2011/067771
(87) Internationale Veröffentlichungsnummer: WO 2012/049196

(56) Entgegenhaltungen:
- EP-A2- 1 937 037
- WO-A1-03/055281
- WO-A1-2008/061562

## Beschreibung

Die Erfindung betrifft die Verwendung einer Sensor-Schnittstelle an einem Betriebsgerät für Leuchtmittel.

Betriebsgeräte, bspw. elektronische Vorschaltgeräte für Gasentladungslampen, können üblicherweise bis zu einer maximal zulässigen Grenztemperatur betrieben werden. Beim Einsatz des Betriebsgeräts in einer Leuchte soll diese Grenztemperatur nicht überschritten werden. Gemäß dem stand der Technik wird somit sichergestellt, dass die Temperatur des in einer bestimmten Leuchte eingesetzten Betriebsgeräts den zulässigen Bereich nicht überschreitet. Wenn diese Kontrolle nun ergibt, dass eine zu hohe Temperatur im Betriebsgerät herrscht, dann kann auf eine Inkompatibilität zwischen Gerät und Leuchte geschlossen werden und das Betriebsgerät sollte gewechselt werden. Alternativ können die vorliegenden Anwendungs- bzw. Umgebungsbedingungen unzulässig sein, was z.B. bei einer zu hohen Umgebungstemperatur der Leuchte der Fall ist.

In diesem Zusammenhang ist typischerweise am Gehäuse des Betriebsgeräts ein Messpunkt angegeben, an dem eine vom Hersteller des Betriebsgerät vorgegebene kritische Temperatur nicht überschritten werden darf. Gemäß dem Stand der Technik wird also an diesen Messpunkt ein Temperaturfühler angebracht, wodurch dann ein Benutzer, wie zum Beispiel ein Leuchtenhersteller überprüfen kann, ob der Einbau des Betriebsgeräts in seine Leuchte zulässig ist. Dies dient insbesondere zur Sicherstellung von sicherheitsrelevanten Aspekten, welche durch bestimmte Normen vorgegeben werden, sowie von zukünftigen Gewährleistungsansprüchen. Üblicherweise muss also ein Leuchtenhersteller Messfühler am Gehäuse des Betriebsgeräts ankleben, da er das Betriebsgerät nicht öffnen darf. Es ist allerdings relativ aufwendig für jedes zu vermessende Betriebsgerät Messfühler anbringen zu müssen. Deshalb wäre es wünschenswert, eine einfachere Möglichkeit vorzusehen.

wird die kritische Temperatur überschritten, so ist das Leuchtengehäuse zu verändern, das Betriebsgerät auszuwechseln und/oder die Anwendungs- bzw. Umgebungsbedingungen anzupassen. Zu hohe Temperaturen des Betriebsgerätsführen bekanntlich zu verringerten Lebensdauern der Betriebsgeräte.

Aus dem Stand der Technik ist ferner bekannt, eine Temperatur-Information bezüglich einer in dem Gehäuse einer Leuchte gemessenen Temperatur eines Leuchtmittels auszugehen. Leuchtmittel und Betriebsgerät sind aber häufig getrennt im Gehäuse einer Leuchte untergebracht oder angeordnet. Deshalb kann eine Messung der Temperatur des Leuchtmittels nicht zur Bestimmung der Temperatur des Betriebsgeräts herangezogen werden.

EP 1 937 C37 A2 und WO 2008/061562 A1 zeigen jeweils ein Betriebsgerät für Leuchtmittel mit Mitteln zur Temperaturmessung.

Die Erfindung hat nunmehr zur Aufgabe, dem Benutzer (etwa dem Leuchtenhersteller) die Möglichkeit zu geben, die Kompatibilität zwischen einem Betriebsgerät für Leuchtmittel und der Leuchte, in der es eingesetzt wird, auf einfachere Weise zu überprüfen. Es wird darauf abgezielt, insbesondere ein Betriebsgerät zur Verfügung zu stellen, das eine einfache Überprüfung der Zulässigkeit des Einbaus des Betriebsgeräts in eine Leuchte ermöglicht.

Diese Aufgabe wird erfindungsgemäß durch die Merkmale des Anspruchs 1 gelöst. Die abhängigen Ansprüche bilden den zentralen Gedanken der Erfindung in besonders vorteilhafter Weise weiter.

Weitere Vorteile, Merkmale und Eigenschaften der vorliegenden Erfindung sollen nunmehr Bezug nehmend auf die Zeichnungen der begleitenden Figuren näher erläutert werden.
Fig. 1 zeigt eine schematische Ansicht eines Betriebsgeräts gemäß der vorliegenden Erfindung, und
Fig. 2 zeigt ein Strom-Spannungs-Diagramm mit Kennlinien einer Gasentladungslampe bei unterschiedlichen Umgebungstemperaturen.

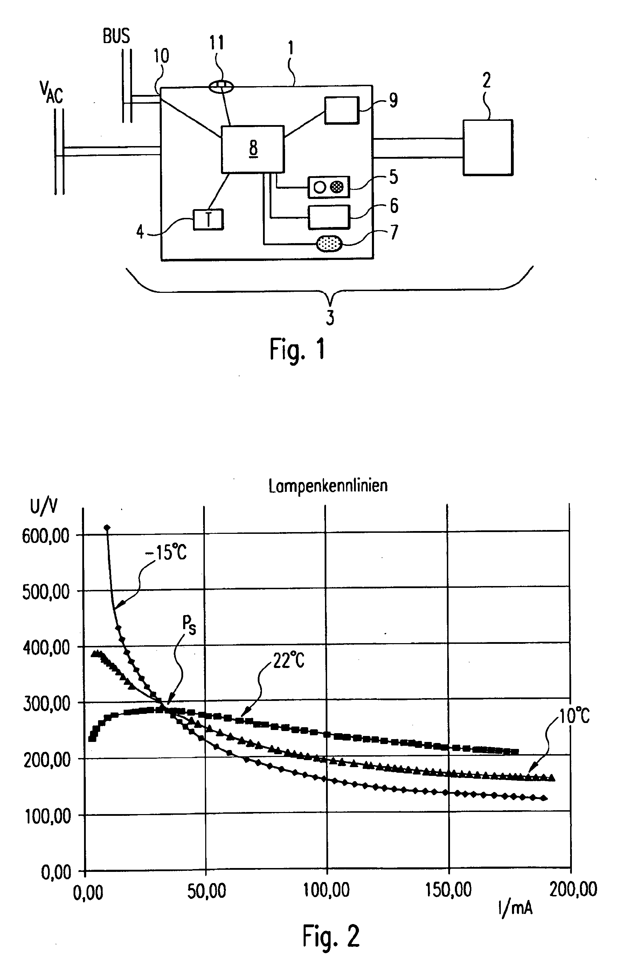

Fig. 1 zeigt ein schematisches Ausführungsbeispiel eines erfindungsgemäßen Betriebsgeräts 1 für ein Leuchtmittel 2, das beispielsweise eine oder mehrere Leuchtstofflampen, Gasentladungslampen, Leuchtdioden (LEDs), organischen Leuchtdioden (LEDs) oder Halogenlampen sein kann. Andere Leuchtmittel können ebenfalls eingesetzt werden. Wenn mehrere Leuchtmittel vorgesehen sind, können diese gemäß einer Serien- und/oder Parallelanordnung geschaltet sein.

Das in einer Leuchte 3 eingesetzte Betriebsgerät 1, bei dem es sich vorzugsweise um ein elektronisches Vorschaltgerät handelt, ist an einen Versorgungsstrom bzw. an eine Versorgungsspannung, vorzugsweise an die konventionellen Netzspannung V_{AC} angeschlossen. Das Betriebsgerät 1 versorgt das Leuchtmittel 2 mit elektrischer Energie. Diese elektrische Energie wird vorzugsweise in bekannter Weise von einer Steuerschaltung 8 derart gesteuert oder geregelt, dass das Leuchtmittel eine gewünschte Helligkeit erzeugt. Die Steuerschaltung 1 kann als Mikrocontroller ausgestaltet sein.

Gemäß der Erfindung wird nunmehr darauf zurückgegriffen, dass das Betriebsgerät 1 in der Lage ist, durch direkte Temperaturmessung oder durch interne Messungen von elektrischen Parametern eine in dem Betriebsgerät 1 herrschende Temperatur zu ermitteln. Gemäß der Erfindung wird nunmehr diese im Betriebsgerät 1 vorliegende Temperaturinformation über eine Schnittstelle als Datensatz, optisch und/oder akustisch ausgegeben.

Das Betriebsgerät 1 weist gemäß der in Fig. 1 gezeigten Ausführungsform einen Temperatursensor 4 auf. Dieser kann die Temperatur T im Betriebsgerät 1 messen. Alternativ kann der Temperatursensor 4 die in der Umgebung des Betriebsgeräts 1 vorliegende Temperatur messen. Alternativ oder zusätzlich kann ein Bauteil in dem Betriebsgerät 1 vorhanden sein, dessen temperaturabhängige Kennlinie alternativ oder zusätzlich zur Bestimmung der Temperatur des Betriebsgeräts 1 verwendet werden kann. Dies wird unten genauer beschrieben. Die Messdaten des Temperatursensors 4 und/oder des Bauteils werden vorzugsweise der Steuerschaltung 8 übermittelt. Temperatursensoren 8 sind beispielsweise oft bei Betriebsgeräten 1 für LED-Anwendungen vorgesehen, so dass in so einem Fall die direkte Messung über den Sensor 8 vorteilhaft ist.

Erfingdungsgemäß kann tatsächlich die vorliegende Temperatur ausgegeben bzw. angezeigt werden, oder aber nur insbesondere visuell oder akustisch, ob die vorliegenden Temperatur unterhalb bzw. oberhalb der kritischen Temperatur liegt.

Die Daten, die erfindungsgemäß vom Betriebsgerät 1 ausgegeben werden, sind also Informationen betreffend diese gemessene Temperatur T. Zum Einen kann unmittelbar der Wert der gemessenen Temperatur ausgegeben werden, beispielsweise über eine Anzeige oder ein Display 6. Der Wert wird beispielsweise in Grad Celsius oder einer sonstigen Maßeinheit der Temperatur ausgegeben. Des Weiteren kann die Steuerschaltung 8 den gemessenen Wert mit einem Grenzwert Tc vergleichen, wobei das Ergebnis dieses Vergleichs optisch oder akustisch wiedergegeben werden kann.

Die Fig. 1 zeigt in diesem Zusammenhang eine Anzeige mit zwei unterschiedlichen LEDs 5, wobei beispielsweise eine rote LED dann leuchtet, wenn die gemessene Temperatur T den Grenzwert Tc überschreitet und sich in einem unzulässigen Temperaturbereich befindet. Bleibt die Temperatur des Betriebsgeräts unter diesem Schwellwert, so leuchtet beispielsweise eine grüne LED.

Als Beispiel für eine akustische Wiedergabe der Informationen betreffend die gemessene Temperatur T weist das in Fig. 1 gezeigte Betriebsgerät einen Lautsprecher 7 auf. Abhängig davon, ob die Temperatur T sich in einem unzulässigen Bereich befindet oder nicht, veranlasst die Steuerschaltung 8 die Ausgabe eines akustischen Warnsignals oder nicht. Es können im Fall eines zulässigen Bereichs bzw. unzulässigen Bereichs zwei unterschiedliche akustische Signale via Lautsprecher 7 ausgegeben werden. Alternativ kann vorgesehen sein, dass nur dann ein akustisches Signal erzeugt wird, falls die gemessene Temperatur T in oder außerhalb des zulässigen Bereichs liegt.

Die LEDs 5 und der Lautsprecher 7 sind Beispiele für eine visuelle bzw. akustische Signalisierung bei zu hoher Temperatur.

Das Betriebsgerät 1 umfasst außerdem einen mit der Steuerschaltung verbundenen Speicher 9. In diesem Speicher 9 wird der Grenzwert Tc gespeichert. Es können auch verschiedene Grenzwerte abgespeichert werden, wobei jeweils nur einen davon ausgewählt wird. Der Speicher 9 ist auch dazu ausgelegt, nicht nur einen Grenzwert Tc sondern einen ganzen unzulässigen Temperaturbereich definieren zu können.

Ein weiterer Aspekt der Erfindung ist, dass die Ausgabe der Tamperaturinformation auch über die Betriebszeit des Betriebsgeräts erfolgen kann und beispielsweise kontinuierlich oder in bestimmten Abständen erneut ausgelesen werden kann. Der Speicher 9, der auch außerhalb vom Betriebsgerät 1 angeordnet sein kann, kann dann beispielsweise auch dazu benutzt werden, die Information bezüglich der gemessenen Temperatur abzuspeichern. Der Speicher kann aber auch Teil des Betriebsgerätes sein und bspw. Informationen über die gemessene Temperatur abspeichern. Somit wird ein Protokollieren der Temperaturinformation ermöglicht.

Die Temperaturinformation kann in dem Betriebsgerät auch über einen längeren Zeitraum kontinuierlich oder in diskreten zeitlichen Abschnitten bzw. Event-getriggert abgespeichert werden. Beispielsweise kann das Event bzw. Ereignis ein unzulässiger Betriebszustand des Betriebsgeräts oder der Leuchte sein. Beispielsweise kann das Betriebsgerät die Temperatur unmittelbar vor dem Abschalten eines Teils oder des gesamten Betriebsgeräts aufgrund eines Störfalls, beispielsweise defektes Leuchtmittel, ermittelt und abspeichert werden.

Wenn das Betriebsgerät dazu ausgelegt ist, die tatsächlich vorliegende Temperatur auszugeben, kann der Benutzer beispielsweise anhand einer vom Betriebsgerätehersteller erstellten Lebensdauertabelle ermitteln, mit welcher mittleren Lebensdauer bei den vorliegenden Anwendungsfall zu rechnen ist. Solch eine Lebensdauertabelle kann auch im Speicher 9 abgespeichert sein. Eine solche Lebensdauertabelle definiert beispielsweise für verschiedene maximale Temperaturen T des Betriebsgeräts 1 jeweils die zu erwartende Lebensdauer des Betriebsgerät 1. Vorzugsweise wird die geschätzte Lebensdauer des Betriebsgeräts 1. von der Steuerschaltung 8 anhand dieser Lebensdauertabelle und der gemessenen Temperaturinformation ermittelt und neben der Temperaturinformation ebenfalls ausgegeben. Alternativ kann diese Lebensdauerinformation unabhängig von der Temperaturinformation vorzugsweise alleine ausgegeben werden. Die geschätzte Lebensdauer kann auf dem Display 6 gezeigt werden. Alternativ kann auch beispielsweise das grüne LED 5 beleuchtet werden, wenn die geschätzte Lebensdauer sich in einem vorab definierten akzeptablen Bereich befindet. Die rote LED 5 würde dann entsprechend leuchten, wenn die Schätzung unterhalb eines Schwellwertes liegt.

Über die DALI Schnittstelle kann es auch möglich sein Steuerbefehle an das Betriebsgerät 1 zu übermitteln. Die zentrale Steuereinheit übermittelt beispielsweise von einem Benutzer, etwa über ein Eingabeinterface, eingegebene Befehle. Zum Beispiel kann ein Befehl an das Betriebsgerät 1 übermittelt werden, der dieses in einen Aufzeichnungsmodus versetzt. Das Betriebsgerät ist also dazu ausgelegt bei Empfang eines solchen Steuerbefehls in einem Aufzeichnungsmodus zu wechseln. In dem Aufzeichnungsmodus zeichnet das Betriebsgerät 1 nach Art eines Datenloggers die Temperatur auf. Dazu misst das Betriebsgerät die Temperatur mittels des Temperatursensors 4 und speichert die Messwerte in dem Speicher 9 ab. Nach Abschluss der Messung, oder wenn ein entprechender Steuerbefehl empfangen wird, der das Betriebsgerät 1 wieder in den normalen Betriebsmodus versetzt, kann die Temperaturaufzeichnung ausgegeben bzw. ausgelesen werden. Somit wird eine Freigabemessung ermöglicht, die beispielsweise in einem Labor des Leuchtenherstellers in einem Prüfaufbau durchgeführt werden kann.

Es ist erfindungsgemäß auch vorgesehen, dass an einer Schnittstelle des Betriebsgeräts 1 ein Auslesegerät (nicht gezeigt) angeschlossen wird, an dem dann ein Benutzer beispielsweise die aktuell vorliegende Temperatur T angezeigt bekommt.

Eine solche Schnittstelle kann eine Sensor-Schnittstelle 11 des Betriebsgeräts 1 sein, die bekanntlich eine Schnittstelle ist, an der ein Tageslichtsensor anschließbar ist. Wenn anstelle eines Tageslichtsensors das Betriebsgerät 1 erkennt, dass dort ein Temperaturauslesegerät angeschlossen ist, kann das Betriebsgerät 1 diese Sensor-Schnittstelle 11 zur Ausgabe von Temperaturinformationen nutzen. Das Betriebsgerät 1 kann dann selbsttätig in den Temperaturerfassungsmodus wechseln, so dass über einen vorgegebenen Zeitraum die Temperaturinformation ermittelt wird und dann über diese Schnittstelle 11 an das dort angeschlossene Temperaturauslesegerät übermittelt wird.

Hier kann das Betriebsgerät 1 bei Erkennen des Anschließens eines Temperaturauslesegeräts an die Sensor-Schnittstelle 11 selbsttätig in den Temperaturmess- und Ausgabebetrieb wechseln.

Die Anzeige mit LEDs 5, das Display 6 und der Lautsprecher 7 können sich auch außerhalb des Betriebsgerät 1 befinden. In diesem Fall werden diese Einheiten vorzugsweise über die Sensor-Schnittstelle 11 gesteuert.

Gemäß einer weiteren Ausführungsform der Erfindung wird die Temperatur im Betriebsgerät bzw. in seiner Umgebung nicht direkt von dem Temperatursensor 4 gemessen, sondern durch interne Messungen von elektrischen Parametern in bekannter Weise ermittelt. Bei den elektrischen Parametern kann es sich beispielsweise um Spannungen, Ströme, Widerstände, etc. handeln.

Alternativ oder zusätzlich dazu kann auch die Kennlinie des Leuchtmittels zur Temperaturermittlung herabgezogen werden. Fig. 2 zeigt beispielsweise ein Strom-Spannungs-Diagramm mit Kennlinien einer Gasentladungslampe bei unterschiedlichen Umgebungstemperaturen. Aus dem Diagramm ist ersichtlich, dass außer bei einem bestimmten Arbeitspunkt Ps die Umgebungstemperatur der Gasentladungslampe sich aus der Lampenspannung und dem Lampenstrom ergibt. Die Kennlinien des Leuchtmittels 2 können also im Speicher 9 abgelegt werden, so dass bei Messung von elektrischen Lampenparametern wie beispielsweise Lampenstrom oder Lampenspannung die Steuerschaltung 8 die Umgebungstemperatur des Leuchtmittels und somit die Umgebungstemperatur des Betriebsgeräts ermitteln kann. Die Temperaturmessung kann beispielsweise bei Ausführung des Betriebsgerätes mit einem Mikrocontroller durch diesen ermittelt werden.

Alternativ oder zusätzlich kann auch eine direkte Bestimmung der Temperatur eines Leuchtmittels durchgeführt werden. Dazu kann ein zweiter Temperatursensor die Temperatur in oder direkt an einem oder mehreren Leuchtmittel messen und über dieselbe oder eine weitere Schnittstelle ausgeben. Die Temperatur des Leuchtmittels wird allerdings vorzugsweise als Zusatzinformation, insbesondere als Zusatzinformation genutzt. Insbesondere zur Bestimmung der Umgebungstemperatur des Betriebsgeräts 1. Es kann zusätzlich oder alternativ zur direkten Messung der Temperatur des Betriebsgeräts 1 auch eine indirekte Messung durchgeführt werden. Dazu kann beispielweise die Kennlinie eines Bauteils aufgenommen werden, wobei das Bauteil im Betriebsgerät 1 angeordnet oder verbaut ist. Die zusätzliche Temperaturinformation aus der Kennlinie ermöglicht eine genauere Bestimmung der Betriebsgerättemperatur. Das Bauteil kann beispielweise eine Diode, ein Thermistor, ein Heiß- oder Kaltleiter, oder ein ähnlich geeignetes Bauteil sein.

### Bezugszeichenliste

- 1: Betriebsgerät
- 2: Leuchtmittel
- 3: Leuchte
- 4: Temperatursensor
- 5: Anzeige mit LEDs
- 6: Display
- 7: Lautsprecher
- 8: Steuerschaltung
- 9: Speicher
- 10: digitale Schnittstelle
- 11: Sensor-Schnittstelle

## Patentansprüche

1. Verwendung
- einer Sensor-Schnittstelle zum Anschließen eines Tageslichtsensors an einem Betriebsgerät (1) für mindestens ein Leuchtmittel (2)
- zur Ausgabe einer Information betreffend einer gemessenen in dem Betriebsgerät (1) oder in dessen Umgebung vorliegenden Temperatur (T),
- wobei das Betriebsgerät (1) bei Erkennen des Anschließens eines Temperaturauslesegeräts anstelle eines Tageslichtsensors an die Sensor-Schnittstelle des Betriebsgeräts (1) selbsttätig in einen Temperaturmess- und Ausgabebetrieb wechselt.

2. Verwendung nach Anspruch 1, wobei die Schnittstelle dazu ausgelegt ist, das Erreichen bzw. Überschreiten eines Grenzwertes zu melden.

3. Verwendung nach einem der vorhergehenden Ansprüche,
wobei das Betriebsgerät einen mit der Schnittstelle verbundenen, externen oder im Betriebsgerät integrierten Speicher aufweist zum Ablegen der von der Schnittstelle ausgegebenen Temperatur-Information.

4. Verwendung nach einem der vorhergehenden Ansprüche,
wobei die Temperaturmessung und die Ausgabe von Temperaturinformation kontinuierlich oder in diskreten zeitlichen Abschnitten stattfinden.

5. Verwendung nach einem der vorhergehenden Ansprüche, wobei das Betriebsgerät aufweist:
- einen Temperatursensor (4) zur direkten Messung der vorliegenden Temperatur (T), oder
- mindestens einen Messpunkt, bei dem wenigstens einen die vorliegende Temperatur (T) beeinflussenden elektrischen Parameter messbar ist, wobei Messungen von dem wenigstens einen elektrischen Parameter zur Ermittlung der Temperatur herangezogen werden.

6. Verwendung gemäß Anspruch 5, wobei das Betriebsgerät eine Steuerschaltung (1) aufweist, die anhand des gemessenen elektrischen Parameters die vorliegende Temperatur (T) ermittelt,
wobei insbesondere zur Ermittlung der vorliegenden Temperatur (T) die Kennlinie des angeschlossenen Leuchtmittels (2) herangezogen wird.

7. Verwendung nach einem der vorhergehenden Ansprüche,
wobei das Betriebsgerät (1) zusätzlich dazu ausgebildet ist, eine Information betreffend die zu erwartende Lebensdauer des Betriebsgeräts (1) auszugeben.

## Claims

1. Use
- of a sensor interface for connecting a daylight sensor to an operating device (1) for at least one lighting device (2)
- for outputting information relating to a current temperature (T) measured in the operating device (1) or in the surroundings thereof,
- wherein the operating device (1) changes independently to a temperature measuring and outputting operation when it detects that a temperature reading device instead of a daylight sensor has been connected to the sensor interface of the operating device (1).

2. Use according to claim 1, wherein the interface is designed to signal when a limit value has been reached or exceeded.

3. Use according to any one of the preceding claims, wherein the operating device has an external memory connected to the interface or a memory integrated into the operating device for filing the temperature information outputted by the interface.

4. Use according to any one of the preceding claims, wherein the temperature measurement and the outputting of the temperature information occur continuously or at discrete intervals of time.

5. Use according to any one of the preceding claims, wherein the operating device has:
- a temperature sensor (4) for direct measuring of the current temperature (T), or
- at least one measuring point, in which at least one of the electrical parameters influencing the current temperature (T) is measurable, wherein the measurements of at least the one electrical parameter are used for determining the temperature.

6. Use according to claim 5, wherein the operating device has a control circuit (1) that determines the current temperature (T) on the basis of the measured electrical parameters, wherein the characteristic curve of the connected lighting device (2) is used particularly for determining the current temperature (T).

7. Use according to any preceding claims, wherein the operating device (1) is further configured to output information about the expected operating life of the operating device (1).

## Revendications

1. Utilisation
- d'une interface de capteur servant à relier un capteur photosensible à un dispositif de fonctionnement (1) pour au moins un dispositif d'éclairage (2)
- pour produire des informations relatives à une température actuelle (T) mesurée dans le dispositif de fonctionnement (1) ou dans les environs de celui-ci,
- dans laquelle le dispositif de fonctionnement (1) passe, indépendamment, à une modalité de mesure et de production de température lorsqu'il détecte qu'un dispositif de lecture de température plutôt qu'un capteur photosensible a été relié à l'interface de capteur du dispositif de fonctionnement (1).

2. Utilisation selon la revendication 1, dans laquelle l'interface est conçue pour signaler si une valeur limite a été atteinte ou dépassée.

3. Utilisation selon l'une quelconque des revendications précédentes, dans laquelle le dispositif de fonctionnement possède une mémoire externe reliée à l'interface ou une mémoire intégrée au sein du dispositif de fonctionnement pour classer les informations de température produites par l'interface.

4. Utilisation selon l'une quelconque des revendications précédentes, dans laquelle la mesure de température et la production des informations de température se déroulent continuellement ou à des intervalles de temps réguliers.

5. Utilisation selon l'une quelconque des revendications précédentes, dans laquelle le dispositif de fonctionnement possède :
- un capteur de température (4) pour une mesure directe de la température actuelle (T), ou
- au moins un point de mesure, dans lequel au moins l'un des paramètres électriques influençant la température actuelle (T) est mesurable, dans laquelle les mesures de l'au moins un paramètre électrique sont utilisées pour déterminer la température.

6. Utilisation selon la revendication 5, dans laquelle le dispositif de fonctionnement possède un circuit de commande (1) qui détermine la température actuelle (T) sur la base des paramètres électriques mesurés, dans laquelle la courbe caractéristique du dispositif d'éclairage relié (2) est utilisée en particulier pour déterminer la température actuelle (T).

7. Utilisation selon l'une quelconque des revendications précédentes, dans laquelle le dispositif de fonctionnement (1) est de plus configuré pour produire des informations au sujet de la durée de vie attendue du dispositif de fonctionnement (1).
